# EUROPEAN PATENT APPLICATION

(11) **EP 3 603 868 A1**
(43) Date of publication of application: **05.02.2020**
(21) Application number: 18775620.0
(22) Date of filing: 27.03.2018
(51) Int. Cl.: B23K 11/06

(54) **WELDING DETERMINATION DEVICE FOR BELT-SHAPED SHEETS, AND WELDING DETERMINATION METHOD**

(30) Priority: 31.03.2017 JP 2017070538
(71) Applicant: JFE Steel Corporation, Tokyo 100-0011 (JP); Primetals Technologies Japan, Ltd., Hiroshima-shi, Hiroshima 733-8553 (JP)
(72) Inventor: OKI, Yuichiro, Tokyo 100-0011 (JP); SAKUMOTO, Motoaki, Tokyo 100-0011 (JP); NAKAYA, Takafumi, Hiroshima-shi Hiroshima 733-8553 (JP); MITSUOKA, Ryosuke, Hiroshima-shi Hiroshima 733-8553 (JP); MITSUZUMI, Tatsuki, Hiroshima-shi Hiroshima 733-8553 (JP)
(74) Representative: Hoffmann Eitle
(86) International application number: PCT/JP2018/012579
(87) International publication number: WO 2018/181397

(57) **Abstract**

The purpose of this invention is to determine occurrence of a joining defect caused by ineffective current. A welding determination device includes: a measurement unit (11) configured to measure temperature of a joint portion between strip-shaped sheets (for example, steel strips (2)) to be joined by seam welding; and a determination unit (13) configured to, based on measurement results by the measurement unit (11), calculate an average temperature Tₐᵥₑ of the joint portion and a temperature difference ΔT that is a difference between a maximum value and a minimum value among temperature of the joint portion and, when the average temperature Tₐᵥₑ is less than or equal to a first threshold value and the temperature difference ΔT is more than or equal to a second threshold value, determine that a joining defect due to ineffective current has occurred at the joint portion.

## Description

### Technical Field

The present disclosure relates to a welding determination device and a welding determination method for strip-shaped sheets regarding a joint portion between strip-shaped sheets to be joined by seam welding.

### Background Art

In production lines that produce and process strip-shaped sheets, such as steel strips, strip-shaped sheets are produced by hot rolling or cold rolling a steel ingot or the like. In such production lines, when preliminary treatment, such as pickling, application of rust preventive oil, and the like are applied to strip-shaped sheets, individually applying the respective processing to the respective strip-shaped sheets is low in production efficiency and impractical. Therefore, a method is used in which, by continuously connecting end portions in the longitudinal direction of respective strip-shaped sheets to each other by means of welding, the above-described processing is performed in a continuous manner.

As a welding method of strip-shaped sheets, seam welding, which is a type of lap resistance welding, is generally used. In the seam welding, by, while rotating a pair of electrode rolls, flowing electric current through a joint portion where end portions of strip-shaped sheets are lapped over each other, the strip-shaped sheets are continuously welded. In such a seam welding, there is a possibility that a joining defect occurs on the joint portion, and there have been cases where a joint portion is ruptured due to a joining defect in a production line and the production line is thereby stopped. A stop of a production line because of a rupture of strip-shaped sheets has a significant effect, such as, in addition to causing an operating rate of the production line to be reduced, causing restoration of the production line to require substantially long time and a repair cost associated with repairs to increase.

In consideration of such a problem, for example, PTL 1 discloses, as a welding determination method of steel strips that are strip-shaped sheets, a method of measuring temperature of a welded portion immediately after welding and determining a joining defect from the measured temperature and a threshold value according to a lap thickness of the steel strips.

### Citation List

### Patent Literature

PTL 1: JP 63-203285 A

### Summary of Invention

### Technical Problem

Meanwhile, in the seam welding in which welding is performed while pressing down a joint portion by means of electrode rolls, the surfaces of the electrode rolls are sometimes unevenly worn depending on use conditions, such as operation duration and the amount of pressing-down. When the surfaces of the electrode rolls have uneven wear, ineffective current that flows through pathways that locations other than the joint portion of the steel strips constitute is generated. Since, in the seam welding, the welding is generally performed with a fixed current value, occurrence of ineffective current causes current flowing through the joint portion to be reduced and thereby causes the welding of the joint portion to become insufficient, which sometimes leads to a joining defect. However, the method described in PTL 1 has been incapable of determining occurrence of such a joining defect.

Accordingly, the present invention has been made in view of the problem described above, and an object of the present invention is to provide a welding determination device and a welding determination method that are capable of determining occurrence of a joining defect caused by ineffective current in seam welding.

### Solution to Problem

According to one aspect of the present invention, a welding determination device for strip-shaped sheets is provided that includes a measurement unit configured to measure temperature of a joint portion between strip-shaped sheets to be joined by seam welding; and a determination unit configured to, based on a measurement result by the measurement unit, calculate an average temperature of the joint portion and a temperature difference that is a difference between a maximum value and a minimum value among temperature of the joint portion and, when the average temperature is less than or equal to a first threshold value and the temperature difference is more than or equal to a second threshold value, determine that a joining defect due to ineffective current has occurred at the joint portion.

According to another aspect of the present invention, a welding determination method is provided that includes a measurement step of measuring temperature of a joint portion between strip-shaped sheets to be joined by seam welding; a calculation step of, based on a measurement result in the measurement step, calculating an average temperature of the joint portion and a temperature difference that is a difference between a maximum value and a minimum value among temperature of the joint portion; and a determination step of, when the average temperature is less than or equal to a first threshold value and the temperature difference is more than or equal to a second threshold value, determining that a joining defect due to ineffective current has occurred at the joint portion.

### Advantageous Effects of Invention

The one aspect of the present invention enables occurrence of a joining defect caused by ineffective current in seam welding to be determined.

### Brief Description of Drawings

FIG. 1 is an explanatory diagram illustrative of a welding determination device for strip-shaped sheets according to an embodiment of the present invention;
FIG. 2 is an explanatory diagram illustrative of a welding method of steel strips by seam welding;
FIG. 3 is another explanatory diagram illustrative of the welding method of steel strips by the seam welding;
FIG. 4 is a flowchart illustrative of a welding determination method for strip-shaped sheets according to the embodiment of the present invention;
FIG. 5 is a graph illustrative of a measurement result of temperature of a joint portion when a joining defect occurred caused by ineffective current;
FIG. 6 is an explanatory diagram illustrative of an occurrence mechanism of ineffective current;
FIG. 7 is another explanatory diagram illustrative of the occurrence mechanism of ineffective current;
FIG. 8 is still another explanatory diagram illustrative of the occurrence mechanism of ineffective current; and
FIG. 9 is a graph illustrative of a measurement result of temperature of the joint portion when a joining defect occurred caused by expulsion.

### Description of Embodiments

In the following detailed description, a number of specific details are described to provide full understanding of the embodiments of the present invention. However, it will be apparent that one or more embodiments can be carried out even in absence of such specific details. In addition, for the simplicity of drawings, known structures and devices are schematically illustrated.

### <Device Configuration>

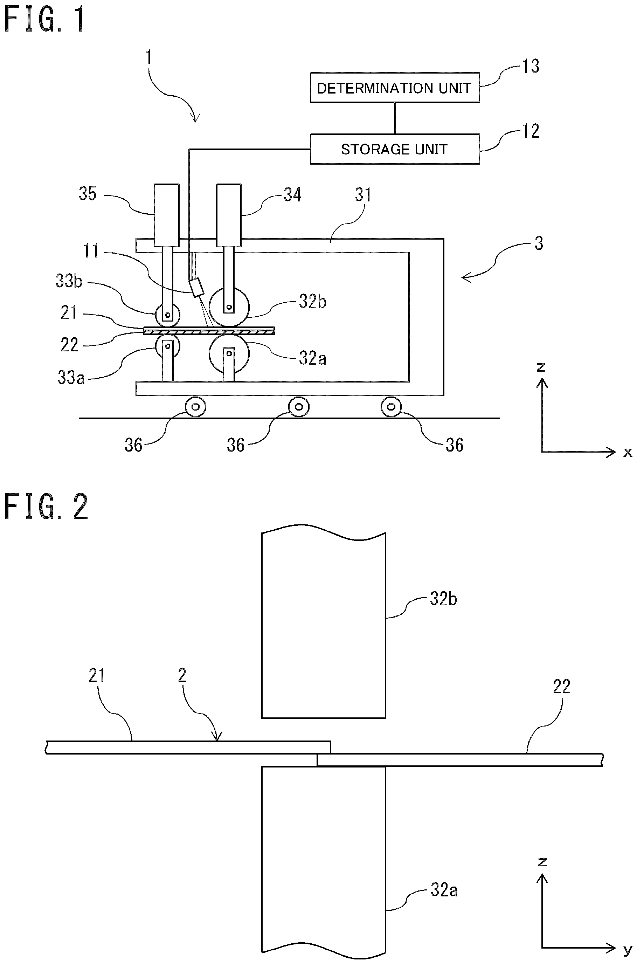

First, with reference to FIGS. 1 to 3, a configuration of a welding determination device 1 according to an embodiment of the present invention will be described. The welding determination device 1 of the present embodiment is a device that determines a joining defect at a joint portion between steel strips 2, which are strip-shaped sheets . In the present embodiment, as illustrated in FIGS. 1 and 2, the steel strips 2 are made up of a preceding strip 21 that is a steel strip first input to a production line, such as a pickling line, and a succeeding strip 22 that is a steel strip input to the production line after the preceding strip 21. In such a production line, a tail end portion of the preceding strip 21 and a front end portion of the succeeding strip 22 are joined through welding by a seam welding machine 3 and the preceding strip 21 and the succeeding strip 22 are thereby made into a continuous single steel strip 2, to which processing according to purposes, such as pickling, is applied.

The seam welding machine 3 includes a frame body 31, a pair of electrode rolls 32a and 32b, a pair of swaging rolls 33a and 33b, two pressurizing cylinders 34 and 35, and a plurality of wheels 36.

The frame body 31 has a U-shaped shape with right-angled corners in front view illustrated in FIG. 1 and has a U-shaped groove arranged extending in parallel with the x-axis direction (the right and left direction with respect to the plane of paper in FIG. 1 and the horizontal direction parallel with the ground).

The pair of electrode rolls 32a and 32b are roll-shaped electrodes and are disposed facing each other in the z-axis direction (the up and down direction with respect to the plane of paper in FIG. 1 and the vertical direction perpendicular to the ground) inside the U-shaped groove of the frame body 31. The pair of electrode rolls 32a and 32b are respectively connected to not-illustrated drive motors and are configured to be, provided with driving force of the drive motors, rotatable in the circumferential directions of the roll shapes thereof in the x-z plane. The pair of electrode rolls 32a and 32b are also connected to a not-illustrated power supply device. The electrode roll 32a is arranged on the z-axis negative direction side when the position of the steel strips 2 is assumed to be at the origin of the z-axis, and is fixed to the frame body 31. The electrode roll 32b is arranged on the z-axis positive direction side and is fixed to the frame body 31 via the pressurizing cylinder 34. In addition, the electrode roll 32b is configured to be movable in the z-axis direction by the pressurizing cylinder 34.

The pair of swaging rolls 33a and 33b are press-down rolls and are disposed facing each other in the z-axis direction at a position on the x-axis negative direction side of the pair of electrode rolls 32a and 32b inside the U-shaped groove of the frame body 31. The pair of swaging rolls 33a and 33b are arranged in such a way as to, tilted with respect to the x-axis and the y-axis (the directions perpendicular to the x-axis direction and the y-axis direction), cross each other, as viewed from the z-axis positive direction side. The pair of swaging rolls 33a and 33b are respectively connected to not-illustrated drive motors and are configured to be, provided with driving force of the drive motors, rotatable in the circumferential directions of the roll shapes thereof. The swaging roll 33a is arranged on the z-axis negative direction side when the position of the steel strips 2 is assumed to be at the origin of the z-axis, and is fixed to the frame body 31. The swaging roll 33b is arranged on the z-axis positive direction side when the position of the steel strips 2 is assumed to be at the origin of the z-axis, and is fixed to the frame body 31 via the pressurizing cylinder 35. In addition, the swaging roll 33b is configured to be movable in the z-axis direction by the pressurizing cylinder 35.

The plurality of wheels 36 are disposed aligned in the x-axis direction and the y-axis direction on the bottom surface on the z-axis negative direction side of the frame body 31 in such a way that the frame body 31 is movable in the x-axis direction.

The seam welding machine 3 has a not-illustrated motor for traveling and is configured in such a way that the frame body 31 is, provided with driving force of the motor for traveling, movable in the x-axis direction.

In seam welding by the seam welding machine 3 having the above-described configuration, welding of the steel strips 2 is performed in accordance with the following operation.

First, by a side guide (not illustrated) for adjusting a position in the width direction of the steel strips 2 and a clamping device (not illustrated) for holding the steel strips 2, positions of the tail end portion of the preceding strip 21 and the front end portion of the succeeding strip 22 are adjusted to be coincident with a joint position. The joint position is, as illustrated in FIGS. 1 and 2, a position at which the central positions in the width direction (x-axis direction) of the preceding strip 21 and the succeeding strip 22 coincide with each other and the tail end of the preceding strip 21 and the front end of the succeeding strip 22 are lapped over each other with a predetermined overlapping margin (for example, of a length of approximately 1.6 mm to 3.8 mm in the y-axis direction).

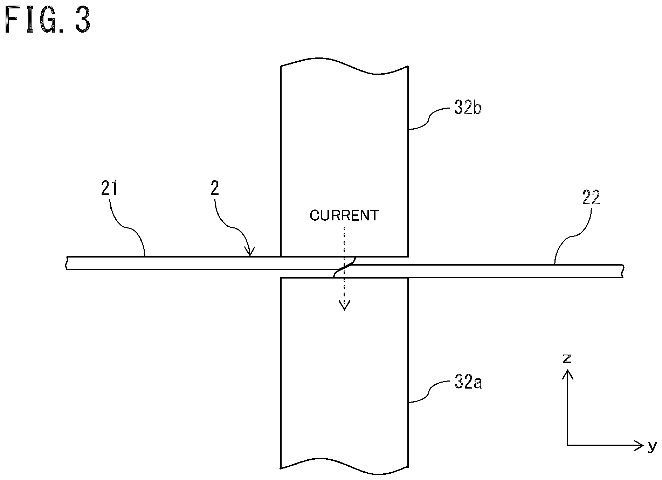

The joint portion between the steel strips 2 that is a portion where the tail end portion of the preceding strip 21 and the front end portion of the succeeding strip 22 are lapped over each other is pressed down and welded by the pair of electrode rolls 32a and 32b, and the preceding strip 21 and the succeeding strip 22 are thereby joined. In the joining by the pair of electrode rolls 32a and 32b, pressurizing and flowing electric current through the joint portion between the steel strips 2 by means of the pair of electrode rolls 32a and 32b with the joint portion between the steel strips 2 clamped between the pair of electrode rolls 32a and 32b causes the joint portion to be heated due to resistance heating of the steel strips 2 and to be flattened, as illustrated in FIG. 3. Further, performing the joining by the pair of electrode rolls 32a and 32b with the frame body 31 made to travel in the width direction and the pair of electrode rolls 32a and 32b made to rotate causes the joining of the joint portion to be continuously performed over the whole width in the x-axis direction of the steel strips 2. The welding by means of the pair of electrode rolls 32a and 32b is performed with a fixed current value that is set in advance depending on a material and a sheet thickness of the steel strips 2. In the present embodiment, both pressing-down force and a current value of welding current by the pair of electrode rolls 32a and 32b are set at higher values than in general seam welding. For example, when the steel strips 2 are made of medium-carbon steel having a sheet thickness of 2 mm and a carbon content of approximately 0.30 mass% to 0.45 mass%, welding is performed at a pressing-down force of approximately 30.0 kN and a current value of approximately 40.0 kA in the present embodiment while the welding is performed at a pressing-down force of approximately 20.6 kN and a current value of approximately 17.5 kA in general seam welding.

In the seam welding by means of the seam welding machine 3, the joint portion the welding of which has been performed by the pair of electrode rolls 32a and 32b are pressed down by the pair of swaging rolls 33a and 33b. In the pressing-down by the pair of swaging rolls 33a and 33b, the joint portion immediately after the welding moves to the position of the pair of swaging rolls 33a and 33b caused by travel of the frame body 31 and, by being pressed down by the pair of swaging rolls 33a and 33b, is pressurized and pressure welded. On this occasion, since the pair of swaging rolls 33a and 33b are arranged crossing each other, the joint portion after pressing-down becomes almost flat. The pressing-down by the pair of swaging rolls 33a and 33b are, as with the pressing-down by the pair of electrode rolls 32a and 32b, performed in a continuous manner over the whole width in the x-axis direction of the steel strips 2.

In the seam welding by the seam welding machine 3, pressing-down and welding of the joint portion between the steel strips 2 by the pair of electrode rolls 32a and 32b causes the joint portion to be joined and a level difference of the joint portion to become smaller than that before pressing-down. Pressing-down of the joint portion between the steel strips 2 by the pair of swaging rolls 33a and 33b after the joining by the pair of electrode rolls 32a and 32b causes the shape of the joint portion to be flattened.

As illustrated in FIG. 1, the welding determination device 1 includes a measurement unit 11, a storage unit 12, and a determination unit 13.

The measurement unit 11 is a temperature measuring device, such as a radiation thermometer, and measures temperature of the joint portion between the steel strips 2 immediately after welding. The measurement unit 11 is fixed to the frame body of the seam welding machine 3 and is arranged at a position at which surface temperature of the joint portion immediately after the welding by the pair of electrode rolls 32a and 32b can be measured. In the present embodiment, the measurement unit 11 is disposed between the electrode roll 32a and the swaging roll 33a inside the U-shaped groove of the frame body 31, as illustrated in FIG. 1. The measurement unit 11 measures surface temperature of the joint portion immediately after welding by the pair of electrode rolls 32a and 32b in a continuous manner while the seam welding is performed and outputs measurement results to the storage unit 12 in conjunction with measurement time.

The storage unit 12 stores measurement results acquired from the measurement unit 11 in conjunction with measurement time as measurement data and outputs the measurement data to the determination unit 13.

The determination unit 13 determines whether or not a joining defect has occurred at the joint portion between the steel strips 2, based on the measurement data acquired from the storage unit 12. Details of a welding determination method used by the determination unit 13 will be described later.

The storage unit 12 and the determination unit 13 are a computer constituted by an input device, an output device, a central processing unit (CPU), a main storage device (internal storage device), an auxiliary storage device (external storage device), and the like, and the main storage device and the central processing unit function as the storage unit 12 and the determination unit 13, respectively.

### <Welding Determination Method>

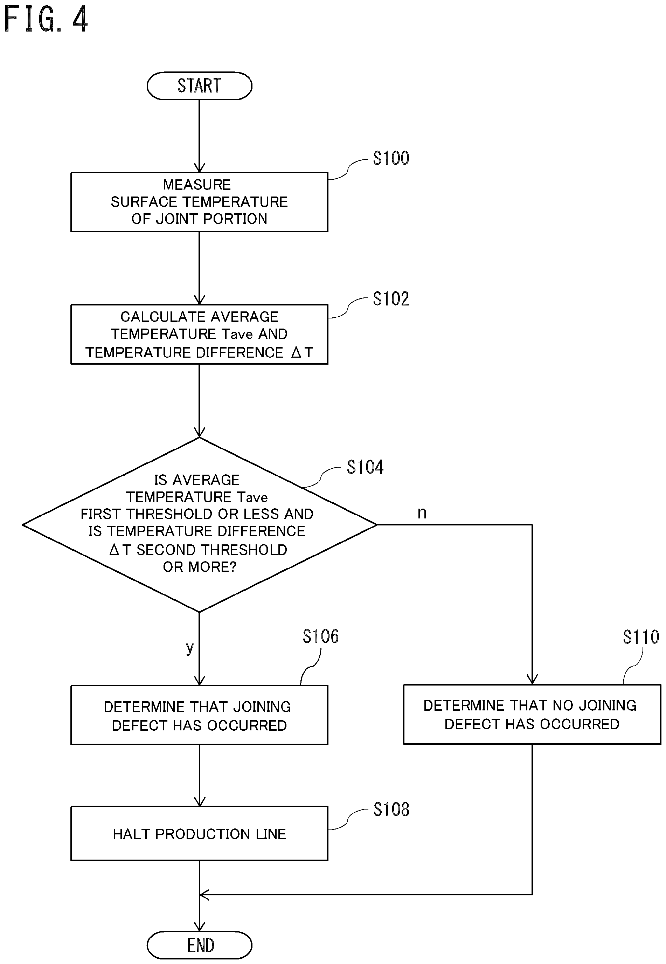

Next, with reference to FIGS. 4 to 9, a welding determination method of strip-shaped sheets according to the present embodiment will be described. As illustrated in FIG. 4, first, the measurement unit 11 measures surface temperature of the joint portion between the steel strips 2 (S100). The measurement of surface temperature in step S100 is performed in parallel with welding and pressing-down of the joint portion by the pair of electrode rolls 32a and 32b and the pair of swaging rolls 33a and 33b. The measurement unit 11 measures the surface temperature of the joint portion immediately after the joint portion has been welded by the pair of electrode rolls 32a and 32b and before the joint portion is pressed-down by the pair of swaging rolls 33a and 33b. Measurement results of temperature by the measurement unit 11 are output to the storage unit 12 and are stored in the storage unit 12 as measurement data.

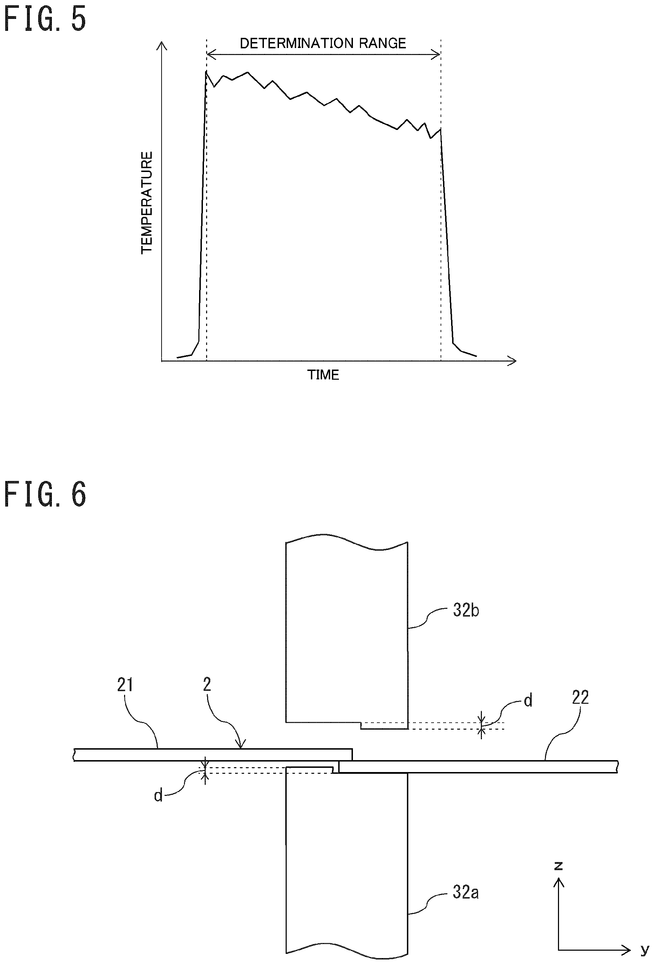

Next, after the measurement of temperature by the measurement unit 11 has been finished, the determination unit 13 calculates an average temperature Tₐᵥₑ and a temperature difference ΔT of the welded portion, based on the measurement data stored in the storage unit 12 (S102). The measurement data are temperature data associated with measurement time and are indicated as a temperature chart as illustrated in FIG. 5. In step S102, before the calculation of the average temperature Tₐᵥₑ and the temperature difference ΔT, extraction of measurement data during a determination range out of the acquired measurement data is performed. The determination range is a measurement period of time corresponding to the sheet width of the steel strips 2 and a period of time during which temperature of the welded joint portion of the steel strip 2 is measured. Specifically, a period of time from a timing at which the welded portion has moved in the width direction by a certain distance since the commencement of current flow between the pair of electrode rolls 32a and 32b to a timing at which the welded portion has moved in the width direction by the certain distance since the end of current flow serves as the determination range. The certain distance is a distance from a contact point of the pair of electrode rolls 32a and 32b to a point of measurement by the measurement unit 11. After the extraction of measurement data during the determination range has been performed, the determination unit 13 calculates, based on the measurement data during the determination range, an average temperature Tₐᵥₑ during the determination range, which is equivalent to the joint portion, and a temperature difference ΔT that is a difference between a maximum value and a minimum value of the temperature during the determination range. Specifically, the average temperature Tₐᵥₑ and the temperature difference ΔT are calculated as an average value of and a difference between a maximum value and a minimum value among a plurality of pieces of temperature data in the measurement data during the determination range, respectively.

After step S102, the determination unit 13 determines whether or not the average temperature Tₐᵥₑ and the temperature difference ΔT, calculated in step S102, are less than or equal to a first threshold value and more than or equal to a second threshold value, respectively (S104).

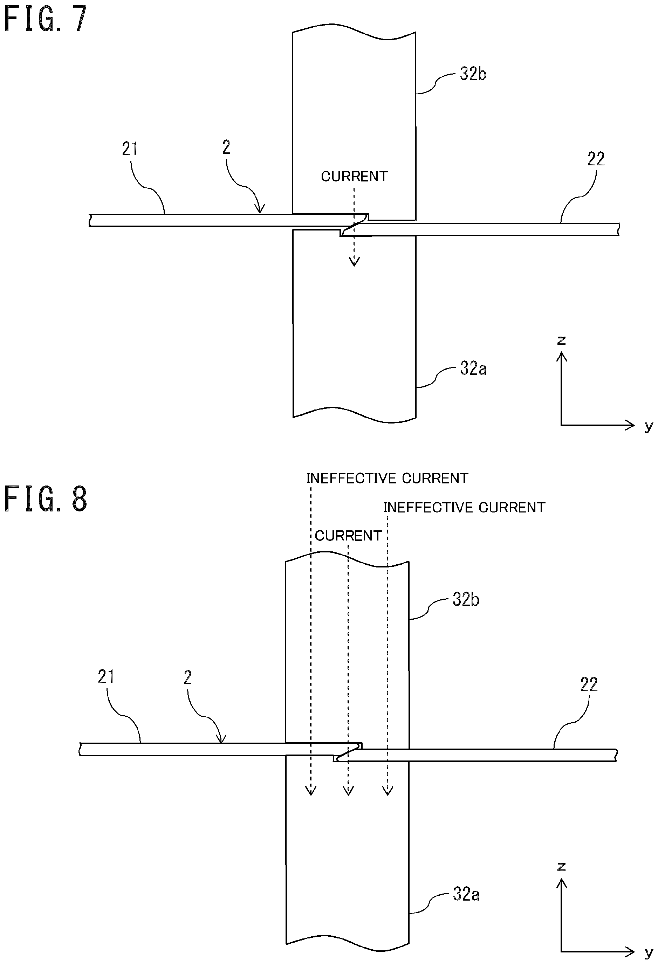

In the case of seam welding in which welding is performed while pressing down the steel strips 2 by means of the pair of electrode rolls 32a and 32b, the surfaces of the pair of electrode rolls 32a and 32b are sometimes unevenly worn into a level difference shape depending on conditions, such as operation time, the amount of pressing-down, and a material of the steel strips 2, as illustrated in FIG. 6. When a level difference d on the surfaces of the pair of electrode rolls 32a and 32b due to uneven wear is smaller than the sheet thickness of the steel strips 2, the welding of the joint portion is done properly in an initial stage of the seam welding because current flows only through the joint portion between the steel strips 2, as illustrated in FIG. 7. However, in the seam welding, since pressurization by the pair of electrode rolls 32a and 32b is performed with a fixed pressure, the thickness in the sheet thickness direction of the joint portion decreases as the seam welding approaches an end stage of welding in which the overlapping margin of the joint portion becomes small due to material deformation. On this occasion, as illustrated in FIG. 8, the succeeding strip 22 and the preceding strip 21 become easier to come into contact with portions of the pair of electrode rolls 32a and 32b that have not worn, and ineffective current that flows through pathways other than the joint portion is generated. Since ineffective current does not contribute to the welding of the joint portion, the welding of the joint portion becomes insufficient and surface temperature of the joint portion decreases as the ineffective current increases. That is, when ineffective current is generated due to uneven wear of the pair of electrode rolls 32a and 32b, a continuously decreasing temperature chart in which the temperature of the joint portion decreases with time, as illustrated in FIG. 5, is obtained. Such ineffective current becomes likely to be generated when the magnitude of the level difference d has increased to approximately the same as the sheet thickness of the steel strips 2 because of a relationship between the thickness of the joint portion and the sheet thickness of the steel strips 2 in the welding end stage and the level difference d.

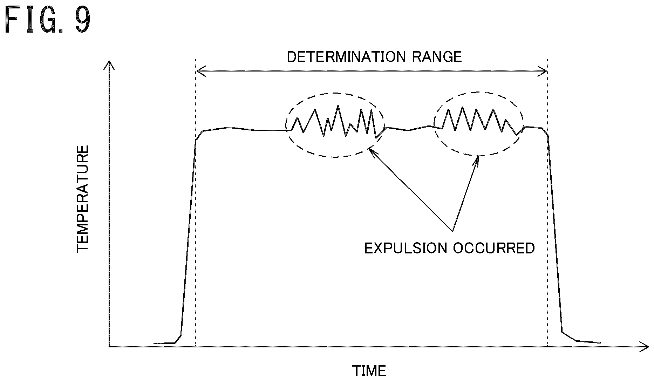

In the determination in step S104, a change in the temperature of the joint portion due to such ineffective current is detected. Thus, the first threshold value is set at a value by which the average temperature Tₐᵥₑ of the joint portion in the case where no phenomenon such as expulsion in which a base material is melted and scattered has occurred can be detected. When expulsion occurs, melted base material is exposed on the surface of the joint portion and the exposed high-temperature melted base material is measured by the measurement unit 11. For this reason, as illustrated in FIG. 9, when expulsion occurs, hunting occurs in the temperature chart and the average temperature Tₐᵥₑ increases to a higher level than in the case where no expulsion has occurred. That is, the first threshold value is, based on temperature data when expulsion occurred, set as a value by which increase in the average temperature Tₐᵥₑ due to expulsion occurrence can be detected. Further, increase in the average temperature Tₐᵥₑ due to expulsion tends to grow larger as the sheet thickness of the steel strips 2 thickens. For this reason, the first threshold value may be set according to the sheet thickness of the steel strips 2. The second threshold value is set according to the material of the steel strips 2, a current value, and the like as a value by which a temperature fall over a range from an initial stage to an end stage of welding, which occurs when ineffective current is generated, in the temperature chart can be detected.

In step S104, when the average temperature Tₐᵥₑ is less than or equal to the first threshold value and the temperature difference ΔT is more than or equal to the second threshold value, the determination unit 13 determines that, in the welded portion of the steel strips 2, a joining defect due to ineffective current has occurred (S106).

After step S106, the determination unit 13 outputs the determination result to a not-illustrated control unit that controls the production line in which the seam welding machine 3 is disposed and makes the control unit halt the production line (S108) . This operation enables the joint portion where a joining defect due to ineffective current has been found to be prevented from rupturing and reduction in an operating rate and a cost required for restoration of the production line to be suppressed compared with a case where the production line is stopped due to a rupture at the joint portion.

On the other hand, in step S104, when the average temperature Tₐᵥₑ is more than the first threshold value or the temperature difference ΔT is less than the second threshold value, the determination unit 13 determines that, in the welded portion of the steel strip 2, no joining defect due to ineffective current has occurred (S110). In the case of step S110, the halt operation of the production line by the control unit is not performed, and the production line can continuously operate.

When having performed the above-described processing steps in steps S100 to S110, the determination of the welded portion in the present embodiment is finished.

### <Variation>

Although the present invention was described above with reference to a specific embodiment, the description is not intended to limit the invention. By referring to the description of the present invention, not only various variations of the disclosed embodiment but also other embodiments of the present invention are apparent to a person skilled in the art. Therefore, it should be understood that CLAIMS also include such variations or embodiments included in the scope and gist of the present invention.

For example, although, in the above-described embodiment, it was assumed that the method was applied to welding of the steel strips 2 in a pickling line, the present invention is not limited to the example. For example, the present invention can be applied to not only a production line of a steel strip but also a production line of a strip-shaped sheet made of another metal. In addition, even in the case where the strip-shaped sheet is the steel strip 2, the present invention is applicable to not only the pickling line but also other lines of the steel strip 2 in which other processing, such as cold rolling and rust prevention, is applied.

### <Advantageous Effects of Embodiment>

(1) A welding determination device 1 for strip-shaped sheets according to one aspect of the present invention includes: a measurement unit 11 configured to measure temperature of a joint portion between strip-shaped sheets (for example, steel strips 2) to be joined by seam welding; and a determination unit 13 configured to, based on measurement results by the measurement unit 11, calculate an average temperature Tₐᵥₑ of the joint portion and a temperature difference ΔT that is a difference between a maximum value and a minimum value among the temperature of the joint portion and determine that a joining defect due to ineffective current has occurred at the joint portion when the average temperature Tₐᵥₑ is less than or equal to a first threshold value and the temperature difference ΔT is more than or equal to a second threshold value.
(2) A welding determination method for strip-shaped sheets according to another aspect of the present invention includes: a measurement step (step S100) of measuring temperature of a joint portion between strip-shaped sheets to be joined by seam welding; a calculation step of (step S102), based on measurement results in the measurement step, calculating an average temperature Tₐᵥₑ of the joint portion and a temperature difference ΔT that is a difference between a maximum value and a minimum value among the temperature of the joint portion; and a determination step (step S104) of, when the average temperature Tₐᵥₑ is less than or equal to a first threshold value and the temperature difference ΔT is more than or equal to a second threshold value, determining that a joining defect due to ineffective current has occurred at the joint portion.

According to the configuration described in the above items (1) and (2), in order to detect an increase in the temperature difference ΔT due to ineffective current that increases toward an end stage of welding, the determination is performed using the second threshold value. Therefore, it is possible to discriminate between a case where the welding has been normally performed and a case where a joining defect has occurred due to ineffective current, in the seam welding. In addition, by performing determination of the average temperature Tₐᵥₑ using the first threshold value in conjunction with the above determination, it is possible to detect an occurrence of a joining defect, as distinguished from a joining defect caused by other factors, such as expulsion. For example, since, when expulsion has occurred, the temperature difference ΔT in the temperature chart tends to be large due to hunting, as illustrated in FIG. 9, detection of only a joining defect caused by ineffective current is difficult by determination based on only the temperature difference ΔT. However, performing determination using the average temperature Tₐᵥₑ in addition to the temperature difference ΔT, as in the configuration described in the items (1) and (2), enables a joining defect caused by ineffective current to be determined as distinguished from a joining defect caused by expulsion.

### Examples

Next, an example that the inventors carried out will be described. In the example, as with the above-described embodiment, with respect to the steel strips 2, whether or not a joining defect due to ineffective current occurred at the joint portion joined by welding was confirmed and a relationship between conditions when the joining defect occurred and temperature of the joint portion was investigated. The steel strips 2 when expulsion occurred was also investigated similarly.

As a result of the example, it was confirmed that, when a joining defect due to ineffective current occurred, the average temperature Tₐᵥₑ became less than or equal to 800°C. It was also confirmed that, when a joining defect due to ineffective current occurred, a continuously decreasing temperature chart, as illustrated in FIG. 5, was obtained and the temperature difference ΔT became large. In the example, it was confirmed that, when the sheet thickness of the thicker one of the steel strips 2 was less than or equal to 1.5 mm, setting the second threshold value for the temperature difference ΔT at 125°C enabled an occurrence of a joining defect due to ineffective current to be detected. It was confirmed that, since the temperature difference ΔT becomes less than 125°C when the welding is performed normally, setting the second threshold value at 125°C enabled an occurrence of a joining defect due to ineffective current to be determined with high accuracy in the above-described embodiment. In addition, it was confirmed that, when the sheet thickness of the thicker one was more than 1.5 mm and less than or equal to 1.8 mm, setting the second threshold value for the temperature difference ΔT at 155°C enabled only an occurrence of a joining defect due to ineffective current to be detected with high accuracy. Further, it was confirmed that, when the sheet thickness of the thicker one was more than 1.8 mm and less than or equal to 2.1 mm, setting the second threshold value for the temperature difference ΔT at 167°C enabled only an occurrence of a joining defect due to ineffective current to be detected with high accuracy. When the sheet thickness of the thicker one is more than 2.1 mm, ineffective current is not generated.

It was also confirmed that, when expulsion occurred, the temperature difference ΔT became more than or equal to 110°C and the average temperature Tₐᵥₑ became more than 800°C. That is, it was confirmed that, in the above-described embodiment, setting the first threshold value and the second threshold value at 800°C and 125°C, respectively, enabled only an occurrence of a joining defect due to ineffective current to be determined with high accuracy.

### Reference Signs List

- 1: Welding determination device
- 11: Measurement unit
- 12: Storage unit
- 13: Determination unit
- 2: Steel strip
- 21: Preceding strip
- 22: Succeeding strip
- 3: Seam welding machine
- 31: Frame body
- 32a, 32b: Electrode roll
- 33a, 33b: Swaging roll
- 34, 35: Pressurizing cylinder
- 36: Wheel

## Claims

1. A welding determination device for strip-shaped sheets comprising:
a measurement unit configured to measure temperature of a joint portion between strip-shaped sheets to be joined by seam welding; and
a determination unit configured to, based on a measurement result by the measurement unit, calculate an average temperature of the joint portion and a temperature difference that is a difference between a maximum value and a minimum value among temperature of the joint portion and, when the average temperature is less than or equal to a first threshold value and the temperature difference is more than or equal to a second threshold value, determine that a joining defect due to ineffective current has occurred at the joint portion.

2. A welding determination method for strip-shaped sheets comprising:
a measurement step of measuring temperature of a joint portion between strip-shaped sheets to be joined by seam welding;
a calculation step of, based on a measurement result in the measurement step, calculating an average temperature of the joint portion and a temperature difference that is a difference between a maximum value and a minimum value among temperature of the joint portion; and
a determination step of, when the average temperature is less than or equal to a first threshold value and the temperature difference is more than or equal to a second threshold value, determining that a joining defect due to ineffective current has occurred at the joint portion.
